**Europäisches Patentamt**

**European Patent Office**

**Office européen des brevets**

(19)

(11) Veröffentlichungsnummer : **0 628 170 B1**

(12) **EUROPÄISCHE PATENTSCHRIFT**

(45) Veröffentlichungstag der Patentschrift :
**25.10.95 Patentblatt 95/43**

(51) Int. Cl.⁶ : **G01R 27/28, H04B 3/46**

(21) Anmeldenummer : **93903156.3**

(22) Anmeldetag : **03.02.93**

(86) Internationale Anmeldenummer :
**PCT/DE93/00109**

(87) Internationale Veröffentlichungsnummer :
**WO 93/17348 02.09.93 Gazette 93/21**

(54) **VERFAHREN ZUM ERKENNEN EINES NICHTLINEAREN VERHALTENS EINER ZU UNTERSUCHENDEN DIGITALEN DATEN-ÜBERTRAGUNGSSTRECKE.**

(30) Priorität : **26.02.92 DE 4206454**

(43) Veröffentlichungstag der Anmeldung :
**14.12.94 Patentblatt 94/50**

(45) Bekanntmachung des Hinweises auf die
Patenterteilung :
**25.10.95 Patentblatt 95/43**

(84) Benannte Vertragsstaaten :
**AT BE CH DE DK ES FR GB GR IT LI LU NL SE**

(56) Entgegenhaltungen :
**WO-A-92/17949**

(56) Entgegenhaltungen :
**AT-B- 380 960**
**DE-A- 2 637 775**
**DE-C- 2 849 119**
**GB-A- 1 160 271**

(73) Patentinhaber : **SIEMENS
AKTIENGESELLSCHAFT
Wittelsbacherplatz 2
D-80333 München (DE)**

(72) Erfinder : **WOLF, Andreas
Menzelstrasse 23-24
D-12157 Berlin (DE)**
Erfinder : **ARWEILER, Hans, Werner
Fregestrasse 42
D-12161 Berlin (DE)**

EP 0 628 170 B1

EP 0 628 170 B1

## Beschreibung

Verfahren zum Erkennen eines nichtlinearen Verhaltens einer zu untersuchenden digitalen Daten-Übertragungsstrecke

Bei einem bekannten Verfahren (GB-PS 11 60 271) zur Ermittlung der Impulsantwort einer zu untersuchenden digitalen Daten-Übertragungsstrecke wird streckeneingangsseitig ein digitales Zufallssignal als Probesignal gesendet. Ein aufgrund des Probesignals streckenausgangsseitig empfangenes Ausgangssignal wird zur Auswertung mit dem bedarfsweise verzögerten Probesignal kreuzkorreliert. Aus der Kreuzkorrelation wird eine Funktion gewonnen, die der Übertragungsfunktion der zu untersuchenden Daten-Übertragungsstrecke entspricht.

Weist die - meist zunächst unbekannte - Übertragungsfunktion der zu untersuchenden Daten-Übertragungsstrecke Nichtlinearitäten auf, so treten im empfangenen Ausgangssignal Summen- und Differenzfrequenzen auf, die im Spektrum des Ausgangssignals bei denselben Frequenzen wie die Spektrallinien des ausgesendeten Probesignals liegen. Damit sind diese durch Nichtlinearitäten verursachten Spektralanteile von den die Übertragungsfunktion beschreibenden Spektralanteilen des Ausgangssignals nicht trennbar. Das bedeutet, daß die so ermittelte Übertragungsfunktion nur bei Linearität der zu untersuchenden Übertragungsstrecke mit deren tatsächlicher Übertragungsfunktion übereinstimmt, während mit zunehmender Nichtlinearität eine erhebliche Abweichung der ermittelten von der tatsächlichen Übertragungsfunktion entsteht.

Bei einem aus der AT-B-380 960 bekannten Verfahren zur selektiven Dämpfungsmessung in Niederfrequenz-Übertragungssystemen wird das System eingangsseitig mit einem taktgeneratorgesteuerten Probesignal mit aquidistanten Spektrallinien gleicher Amplitude eines Quasi-Rauschgenerators beaufschlagt. Ein gleichartig taktgeneratorgesteuerter Kammfilter ist mit seinen Durchlaßbereichen auf die Spektrallinien des Probesignals abgestimmt. Aus dem Pegelverhältnis zwischen Probesignal und Ausgangssignal läßt sich auf den Dämpfungsgrad schließen. Durch System-Nichtlinearitäten auftretende Verzerrungen können nicht erkannt und eliminiert werden.

Aus der nicht vorveröffentlichten WO 92/17949 ist ein Verfahren zum Ermitteln der Übertragungseigenschaften einer elektrischen Leitung bekannt, bei dem als Probesignal ein binäres bipolares Zufallszahlenfolgesignal mit dem Crest-Faktor 1 verwendet wird. Möglichkeiten zum Bestimmen eines nichtlinearen Verhaltens der Leitung sind nicht angesprochen.

Die DE-A1-26 37 775 beschreibt ein Verfahren zum Abschätzen der Übertragungsfunktion eines Systems, bei dem das System eingangsseitig mit kurzzeitigen, nichtstationären breitbandigen Rauschsignalen angeregt wird. Infolge von Nichtlinearitäten des Systems in den Ausgangssignalen enthaltene Verzerrungen werden mittels Durchschnittsbildung der Ausgangssignale mehrerer Einzelmessungen eliminiert. Damit ist eine Abschätzung der Übertragungsfunktion in einem gegebenen Genauigkeitsbereich möglich; ein nichtlineares Verhalten eines Systems kann mit dem bekannten Verfahren weder erkannt noch qualitativ beurteilt werden.

Der Erfindung liegt daher die Aufgabe zugrunde, ein Verfahren zu schaffen, mit dem in zuverlässiger und einfacher Weise ein nichtlineares Verhalten einer zu untersuchenden digitalen Daten-Übertragungsstrecke erkannt und daraus bedarfsweise die Qualität einer ermittelten Übertragungsfunktion beurteilt werden kann.

Diese Aufgabe wird erfindungsgemäß gelöst durch ein Verfahren zum Erkennen eines nichtlinearen Verhaltens einer zu untersuchenden digitalen Daten-Übertragungsstecke,
- bei dem ein Probesignal dadurch gebildet wird, daß eine Sequenz mit im Frequenzbereich äquidistant verteilten Spektralanteilen mit einer derartigen Zusatzfunktion verknüpft wird, daß das Probesignal neben den Spektralanteilen der Sequenz zusätzliche, vorzugsweise zumindest teilweise äquidistante, Spektralanteile enthält,
- bei dem die Übertragungsstrecke eingangsseitig mit dem periodisch ausgesendeten Probesignal beaufschlagt wird und
- bei dem ein aufgrund des Probesignals streckenausgangsseitig empfangenes Ausgangssignal bei vorgegebenen Auswertungsfrequenzen ausgewertet wird, wobei als Auswertungsfrequenzen Frequenzen gewählt werden, bei denen das Probesignal an sich spektralanteilsfrei ist und bei denen das Probesignal nach einer Selbstfaltung im Frequenzbereich Zusatzspektralanteile aufweist. Dem erfindungsgemäßen Verfahren liegt die wesentliche Erkenntnis zugrunde, daß durch Modifizierung einer periodisch ausgesendeten Sequenz mittels eines Zusatzsignals auf Nichtlinearitäten zurückzuführende Spektralanteile getrennt von den Spektralanteilen der ursprünglichen Sequenz auftreten und damit separat auswertbar sind. Eine nichtlineare Übertragungsfunktion enthält grundsätzlich quadratische Anteile und/oder Anteile höherer Potenz. Diese Anteile bewirken eine Multiplikation des Probesignals, die einer Selbstfaltung des Probesignals im Frequenzbereich entspricht. Auf die durch die Selbstfaltung hervorgerufenen Zusatz-Spektralanteile sind die Auswertungsfrequenzen abgestimmt, so daß in vorteilhafter Weise die

2

bei den Auswertungsfrequenzen auftretenden Spektralanteile des Ausgangssignals unmittelbar als Erkennungszeichen für eine Nichtlinearität der Übertragungsstrecke einfach und gezielt ausgewertet werden können. Ein weiterer Vorteil der Erfindung besteht darin, daß sich aus den Zusatz-Spektralanteilen ein Maß für die Nichtlinearität ableiten läßt.

Die verwendete Sequenz kann mit der Zusatzfunktion, die beispielsweise ein Spektrum eines sogenannten $\delta$ -(Delta)-Kammes aufweist, additiv verknüpft werden.

Eine hinsichtlich der Generierung des Probesignals vorteilhafte Fortbildung des erfindungsgemäßen Verfahrens besteht darin, daß die Sequenz mit der Zusatzfunktion multiplikativ verknüpft wird.

In diesem Zusammenhang hat es sich als besonders günstig erwiesen, wenn als Zusatzfunktion eine trigonometrische Funktion, insbesondere eine Sinus- oder Cosinus-Funktion, verwendet wird.

Das erfindungsgemäße Verfahren läßt sich besonders vorteilhaft dadurch ausgestalten, daß als Sequenz ein binäres, bipolares Zufallszahlenfolgesignal mit einem Crestfaktor von vorzugsweise Eins verwendet wird, daß das Ausgangssignal mit einem dem Probesignal entsprechenden Referenzsignal unter Gewinnung eines Meßsignals im Zeitbereich kreuzkorreliert oder im Frequenzbereich multipliziert wird und daß das Meßsignal in Abhgängigkeit der Größe der Zusatz-Spektralanteile ausgewertet wird. Bei dieser Ausgestaltung ist das erfindungsgemäße Verfahren in einfacher Weise mit einem aus der älteren deutschen Patentanmeldung mit dem amtlichen Aktenzeichen P 41 10 439.0-35 beschriebenen Verfahren kombinierbar, bei dem das Ausgangssignal mit einem dem Probesignal entsprechenden Referenzsignal unter Gewinnung eines Meßsignals kreuzkorreliert bzw. multipliziert wird; durch entsprechend erweiterte, zusätzliche Abtastung des Meßsignals bei den Auswertungsfrequenzen kann das Meßsignal sowohl zum Ermitteln der Übertragungseigenschaften als auch zur Erkennung einer (ggf. nicht mehr tolerierbaren) Nichtlinearität der Daten-Übertragungsstrecke herangezogen werden. Als besonders vorteilhaft wird es angesehen, wenn beim Übersteigen eines bestimmten Zusatz-Spektralanteils die ermittelte Übertragungsfunktion und ggf. weitere Übertragungseigenschaften zumindest als fehlerhaft gekennzeichnet werden.

Die Erfindung wird nachfolgend anhand einer Zeichnung näher erläutert; es zeigen

Figur 1 ein Ausführungsbeispiel einer Anordnung zur Durchführung des erfindungsgemäßen Verfahrens in schematischer Darstellung,

Figur 2 den zeitlichen Verlauf einer Sequenz,

Figur 3 ein durch Verknüpfung der Sequenz mit einer Zusatzfunktion gewonnenes Probesignal und

Figur 4 ein streckenausgangsseitig empfangenes Ausgangssignal.

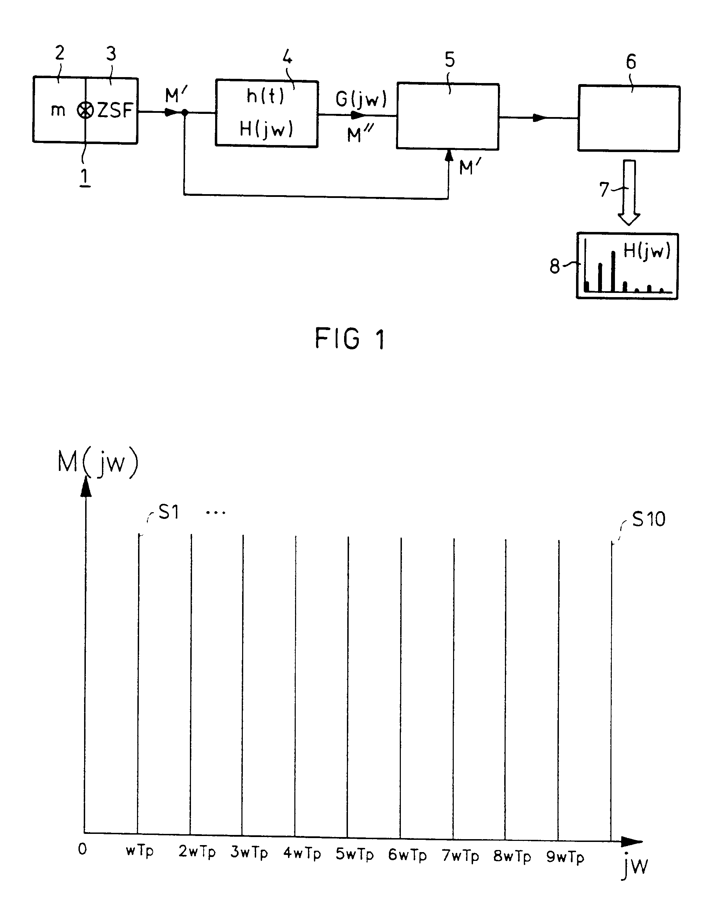

Gemäß Figur 1 ist zur Erzeugung eines Probesignals M' ein Generator 1 vorgesehen. Der Generator 1 enthält einen Pseudozufallsgenerator 2 zur Erzeugung von $2^n$-m-Sequenzen (vgl. "Halbleiterschaltungstechnik", Tietze/Schenk, 1980, S. 509 - 512). Eine von dem Pseudozufallsgenerator 2 gebildete $2^5$-m-Sequenz m kann aus der folgenden Zahlenfolge

$$m(n) = (1001011001111100011011101010000) \quad (G1 - 1)$$

mit $0 \leqq n \leqq 30$ bestehen. Durch Zuordnung der binären Werte 0 und 1 zu den bipolaren Werten -1 und +1 ergibt sich ein binäres, bipolares Signal, das einen Crestfaktor (Spitzenwert / Effektivwert) von 1 aufweist.

Das Spektrum einer derartigen periodisch ausgesendeten Sequenz m ist allgemein durch eine frequenzdiskrete si-Funktion

$$M(jw) = si(wT_p/2) . \delta_{wp}(w) \quad (G1 - 2)$$

mit $T_p$: Periodendauer der m-Sequenz m;

$$w_p = 2\pi/T_p;$$

$\delta_{wo}(w)$: Delta-Kamm zu beschreiben.

Unter Delta-Kamm ist eine Funktion zu verstehen, die aus in vorgegebenem, äquidistantem Abstand (in diesem Fall $w_p = 2\pi/T_p$) angeordneten Delta-Impulsen gebildet ist.

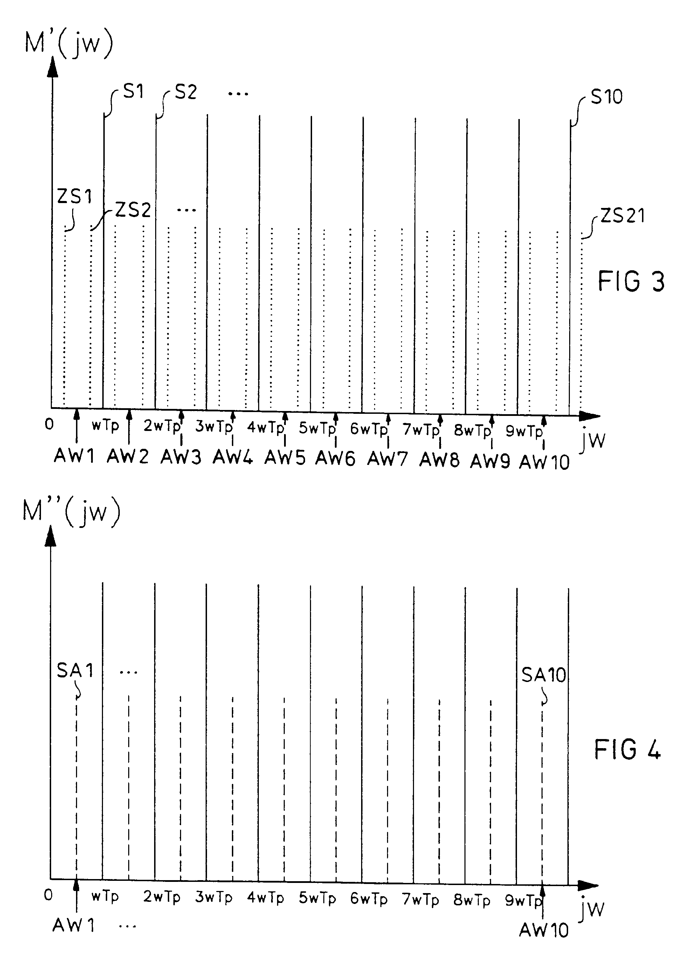

Gemäß Figur 2 weist die periodisch ausgesendete m-Sequenz m Spektrallinien S1...S10 nur für

$$w = n . 2\pi/T_p \text{ mit n aus } N_0 \quad (G1 - 3)$$

auf. Die Spektrallinien S1...S10 sind zumindest in einem für die Untersuchung interessierenden Frequenzbereich äquidistant verteilt. Wird die m-Sequenz mit ihrem Spektrum gemäß Figur 2 über eine Übertragungsstrecke mit nichtlinearer Übertragungsfunktion übertragen, so treten auch Summen- und Differenz-Frequenzen im Spektrum der empfangenen m-Sequenz bei den Frequenzen gemäß Gleichung (G1-3) auf. Sie überlagern damit die Spektrallinien S1...S10 der gesendeten, ursprünglichen m-Sequenz m, so daß eine Aufteilung und Auswertung des Spektrums hinsichtlich der Übertragungsfunktion und der Verfälschung durch Nichtlinearitäten nicht möglich ist.

Der Generator 1 (Figur 1) enthält daher eine Verknüpfungsanordnung 3, die eine Zusatzfunktion ZSF mit der m-Sequenz m verknüpft. Im vorliegenden Ausführungsbeispiel wird die m-Sequenz m multiplikativ mit einer Cosinus-Funktion

$$ZSF(t) = 1/2 + cos(w_1t) \quad (G1 - 4)$$

EP 0 628 170 B1

im Zeitbereich multipliziert.

Für das Spektrum M'(jw) eines durch diese Modulation der m-Sequenz m mit der Cosinus-Funktion ZSF gebildeten Probesignals M' erhält man unter Berücksichtigung der Ausblendeigenschaft der Delta-Funktion

$$M'(jw) = [si(wT_p/2).\delta_{wp}(w)] * [\delta(w \pm w_1) + \delta(w)] \quad (G1 - 5)$$
$$= M(jw) + M(j(w - w_1)) + M(j(w + w_1)) \quad (G1 - 6)$$

mit *: Faltungsfunktion.

Wählt man beispielsweise

$$w_1 = 1/4\,T_p \quad (G1 - 7)$$

ergibt sich für das Probesignal M' ein Spektrum M'(jw) gemäß Figur 3, das neben den ursprünglichen Spektralanteilen S1...S10 zusätzliche, untereinander zumindest teilweise äquidistante und zu den jeweils nächstgelegenen Spektralanteilen S1...S10 äquidistante, zusätzliche Spektralanteile ZS1..ZS21 enthält. Damit exisitieren im Spektrum des Probesignals M' Spektrallinien ZS1...ZS10 für Frequenzen gemäß Gleichung (G1-3) sowie zusätzliche Spektralanteile ZS1...ZS21 für

$$w_n = n . 2\pi(1/T_p) \pm 2\pi(1/4\,T_p) \text{ mit n aus } N_0. \quad (G1 - 8)$$

Das Verhältnis zwischen dem ersten Term (Cosinusanteil) und dem zweiten Term (Gleichanteil) in der zweiten eckigen Klammer der Gleichung (G1-5) bestimmt das Höhenverhältnis der Spektralanteile gemäß Figur 3. In Abstimmung auf die Lage aller Spektralanteile des Probesignals M' werden als Auswertungsfrequenzen AW1...AW10 Frequenzen gemäß der Vorschrift

$$AWn = n . \pi(1/T_p) \quad (G1 - 9)$$

definiert.

Das Probesignal M' (Figur 1) wird einer zu untersuchenden Daten-Übertragungsstrecke 4 zugeführt, die eine zu ermittelnde Gewichtsfunktion oder Übertragungsfunktion h(t) im Zeitbereich oder H(jw) im Frequenzbereich aufweist. Bei Betrachtung im Frequenzbereich formt die Übertragungsfunktion H(jw) der Übertragungsstrecke 4 das Probesignal M' zu G um, wobei gemäß

$$G(jw) = H(jw) . M(jw) \quad (G1 - 9)$$

G(jw) das Ausgangssignal der Übertragungsstrecke 4 ist. Dieses kann wie nachfolgend noch näher erläutert zusätzlich zur Bestimmung von Übertragungseigenschaften der Daten-Übertragungsstecke 4 weiter ausgewertet werden.

Wenn die Daten-Übertragungsstrecke 4 ein nichtlineares Verhalten aufweist, läßt sich der nichtlineare Anteil durch ein Polynom approximieren. Die Übertragungsfunktion der Übertragungsstrecke 4 kann so z. B. einen quadratischen Anteil aufweisen, der auch das Probesignal M' beeinflußt, so daß sich streckenausgangsseitig ein empfangenes Ausgangssignal M'' mit einem Spektrum gemäß der Faltung

$$M''(jw) = M'(jw) * M'(jw) \quad (G1 - 10)$$

unter Vernachlässigung der Wichtung der si-Funktion zu

$$\approx [\delta_{wp}(w) * [\delta(w\pm w_1) + \delta(w)]] * [\delta_{wp}(w) * [\delta(w\pm w_1) + \delta(w)]] \quad (G1 - 11)$$
$$= [\delta_{wp}(w) + \delta_{wp}(w - w_1) + \delta_{wp}(w + w_1)] * [\delta_{wp}(w) + \delta_{wp}(w - w_1) + \delta_{wp}(w + w_1)] \quad (G1 - 12)$$
$$= 3\delta_{wp}(w) + 2\delta_{wp}(w - w_1) + 2\delta_{wp}(w + w_1) + \delta_{wp}(w - 2w_1) + \delta_{wp}(w + 2w_1) \quad (G1 - 13)$$

ergibt.

Der prinzipielle Verlauf des Spektrums M''(jw) des Ausgangssignals M'' ist in Figur 4 gezeigt. Der quadratische Anteil in der Übertragungsfunktion der Übertragungsstrecke 4 bewirkt Zusatz-Spektralanteile SA1...SA10, deren durch die signifikanten Terme

$$\delta_{wp}(w - 2w_1) \text{ und } \delta_{wp}(w + 2w_1) \quad (G11 - 14)$$

beschriebene Lage markant für Nichtlinearitäten ist. Die Lage der Zusatz-Spektralanteile SA1...SA10 hängt unmittelbar von der Wahl für w gemäß (G1-7) und von dem betrachteten Term des die Nichtlinearität beschreibenden Polynoms ab. Selbstverständlich können bei anderer Wahl für $w_1$ oder beispielsweise bei Betrachtung eines Anteils höherer Potenz (z. B. des kubischen Anteils) der Nichtlinearitätsfunktion entsprechende Aussagen gewonnen werden. Die Zusatz-Spektralanteile SA1...SA10 liegen jeweils an den Auswertungsfrequenzen AW1...AW10 und gestatten damit eine unmittelbare und einfache Auswertung. Im vorliegenden Fall ergibt die Auswertung eine erhebliche Nichtlinearität der untersuchten Übertragungsstrecke 4. Durch Vergleich des Ausgangssignals M'' mit dem Probesignal M' läßt sich ein Maß für die Nichtlinearität ableiten, das beispielsweise gemäß

$$V \approx \sum_{w=-\infty}^{+\infty} [\delta_{wp}(w-2w_1) + \delta_{wp}(w+2w_1).M''(jw)] / \sum_{w=-\infty}^{+\infty} \delta_{wp}(w).M''(jw) \quad (G1-15)$$

in Anlehnung an die Definition des Klirrfaktors definiert ist.

4

Obwohl bei der Erzeugung des Probesignals eine multiplikative Verknüpfung gewählt wurde, ist auch eine additive Beimengung einer Zusatzfunktion in Form eines Cosinus-Signals denkbar, dessen Spektrallinien z. B. bei $\pm$ 1,5 w$T_p$ liegen.

Wie in der älteren deutschen Patentanmeldung mit dem amtlichen Aktenzeichen 41 10 439.0-35 ausführlich dargestellt ist, kann aus dem Spektrum G(jw) am Ausgang der Übertragungsstrecke 4 (Figur 1) durch Faltung mit dem zeitinversen Probesignal M' in einem Kreuzkorrelator 5 und anschließender Fourier-Transformation in einer Einrichtung 6 direkt die Übertragungsfunktion H(jw) ermittelt und über einen Datenbus 7 einer Anzeigeeinrichtung 8 zugeführt werden. Das ermittelte Maß V für die Nichtlinearität der Übertragungsstecke 4 kann - z. B. beim Überschreiten eines zulässigen Höchstmaßes - in vorteilhafter Weise direkt dazu verwendet werden, die Anzeige der Übertragungsfunktion zu unterdrücken oder zumindest ein auf die eingeschränkte Qualität der ermittelten Übertragungsfunktion hinweisendes Ausgangssignal auszugeben.

Die Darstellung der Spektren in den Figuren 2 bis 4 ist nur ausschnittsweise zu verstehen, so daß die Verhältnisse selbstverständlich auf die jeweils interessierenden Frequenzbereiche übertragen oder ausgedehnt werden können.

## Patentansprüche

1.  Verfahren zum Erkennen eines nichtlinearen Verhaltens einer zu untersuchenden digitalen Daten-Übertragungsstrecke (4),
    - bei dem ein Probesignal (M') dadurch gebildet wird, daß eine Sequenz (m) mit im Frequenzbereich äquidistant verteilten Spektralanteilen (S1...S10) mit einer derartigen Zusatzfunktion (ZSF) verknüpft wird, daß das Probesignal (M') neben den Spektralanteilen (S1...S10) der Sequenz (m) zusätzliche, vorzugsweise zumindest teilweise äquidistante, Spektralanteile (ZS1...ZS21) enthält,
    - bei dem die Übertragungsstrecke (4) eingangsseitig mit dem periodisch ausgesendeten Probesignal (M') beaufschlagt wird und
    - bei dem ein aufgrund des Probesignals (M') streckenausgangsseitig empfanges Ausgangssignal (M'') bei vorgegebenen Auswertungsfrequenzen (AW1...AW10) ausgewertet wird, wobei als Auswertungsfrequenzen (AW1...AW10) Frequenzen gewählt werden, bei denen das Probesignal (M') an sich spektralanteilsfrei ist und bei denen das Probesignal (M') nach einer Selbstfaltung im Frequenzbereich Zusatz-Spektralanteile (SA1...SA10) aufweist.

2.  Verfahren nach Anspruch 1,
    **dadurch gekennzeichnet**, daß
    die Sequenz (m) mit der Zusatzfunktion (ZSF) multiplikativ verknüpft wird.

3.  Verfahren nach Anspruch 2,
    **dadurch gekennzeichnet,** daß
    als Zusatzfunktion (ZSF) eine trigonometrische Funktion verwendet wird.

4.  Verfahren nach einem der vorangehenenden Ansprüche,
    **dadurch gekennzeichnet**, daß
    als Sequenz (m) ein binäres, bipolares Zufallszahlenfolgesignal mit einem Crestfaktor von vorzugsweise Eins verwendet wird, daß das Ausgangssignal (M'') mit einem dem Probesignal (M') entsprechenden Referenzsignal unter Gewinnung eines Meßsignals (KKF) im Zeitbereich kreuzkorreliert oder im Frequenzbereich multipliziert wird und daß das Meßsignal (KKF) in Abhängigkeit der Größe der Zusatz-Spektralanteile (SA1...SA10) ausgewertet wird.

## Claims

1.  A process for detecting non-linear behaviour of a digital data transmission link (4) to be investigated
    - wherein a sample signal (M') is formed in that a sequence (m) comprising spectral components (S1..S10) equidistantly distributed in the frequency range are logic-linked to an additional function (ZSF) such that the sample signal (M') contains, in addition to the spectral components (S1...S10) of the sequence (m), additional, preferably at least partially equidistant, spectral components (ZS1...ZS21),
    - wherein the transmission link (4) is supplied at the input end with the periodically transmitted sample signal (M′) and

- wherein an output signal (M″), received at the output end of the link as a result of the sample signal (M′), is analyzed at given analysis frequencies (AW1...AW10), where frequencies at which the sample signal (M′) is itself free of spectral components and at which the sample signal (M′), after self-convolution within the frequency domain, exhibits additional spectral components (SA1..SA10) are selected as analysis frequencies (AW1...AW10).

**2.** A process as claimed in Claim 1, characterised in that the sequence (m) is multiplicatively linked with the additional function (ZSF).

**3.** A process as claimed in Claim 2, characterised in that a trigonometric function is used as additional function (ZSF).

**4.** A process as claimed in one of the preceding claims, characterised in that a binary, bipolar random numerical sequence signal with a crest factor of preferably one is used as sequence (m), that the output signal (M″) is cross-correlated in the time domain or multiplied in the frequency domain with a reference signal corresponding to the sample signal (M′) with the acquisition of a measurement signal (KKF), and that the measurement signal (KKF) is analyzed in dependence upon the magnitude of the additional spectral components (SA1...SA10).

## Revendications

**1.** Procédé pour identifier un comportement non linéaire d'une section de transmission numérique de données (4) à contrôler, selon lequel
  - on forme un signal échantillon (M′) en combinant une séquence (m) comportant des composantes spectrales (S1... S10) réparties de façon équidistante dans la gamme des fréquences, à une fonction additionnelle (ZSF) telle que le signal d'échantillon (M′) contienne, en plus des composantes spectrales (S1...S10) de la séquence (m), des composantes spectrales supplémentaires (ZS1...ZS21), de préférence au moins partiellement équidistante,
  - on charge, côté entrée, la section de transmission (4) avec le signal échantillon (M′) émis périodiquement, et
  - on évalue un signal de sortie (M″) , reçu sur le côté sortie de la section de transmission, sur la base du signal échantillon (M′), pour des fréquences d'évaluation prédéterminées (AW1...AW10), auquel cas on choisit comme fréquences d'évaluation (AW1...AW10), des fréquences pour lesquelles le signal échantillon (M′) est exempt en soi de composantes spectrales et pour lesquelles le signal échantillon (M′) possède des composantes spectrales supplémentaires (SA1...SA10) après une auto-convolution.

**2.** Procédé suivant la revendication 1, caractérisé par le fait que l'on combine de façon multiplicative la séquence (m) à la fonction supplémentaire (ZSF).

**3.** Procédé suivant la revendication 2, caractérisé par le fait qu'on utilise une fonction trigonométrique en tant que fonction supplémentaire (ZSF).

**4.** Procédé suivant l'une des revendications précédentes, caractérisé par le fait qu'on utilise comme séquence (m), un signal binaire bipolaire formé d'une suite de nombres aléatoires comportant un facteur d'amplitude égal de préférence à un, qu'on soumet le signal de sortie (M″) à une corrélation croisée avec le signal de référence correspondant au signal échantillon (M″), tout en obtenant un signal de mesure (KKF), dans la plage temporelle, ou qu'on le multiplie par ce signal de référence dans la gamme des fréquences et qu'on évalue le signal de mesure (KKF) en fonction de l'amplitude des composantes spectrales supplémentaires (SA1...SA10).

FIG 1

M'(jw)

S1   S2   ...                                                                    S10

ZS1   ZS2   ...                                                          ZS21

FIG 3

0    wTp   2wTp  3wTp  4wTp  5wTp  6wTp  7wTp  8wTp  9wTp        jw

AW1 AW2 AW3 AW4 AW5 AW6 AW7 AW8 AW9 AW10

M''(jw)

SA1   ...                                                                SA10

FIG 4

0    wTp   2wTp  3wTp  4wTp  5wTp  6wTp  7wTp  8wTp  9wTp        jw

AW1   ...                                                              AW10